# EUROPÄISCHE PATENTSCHRIFT

(11) **EP 2 217 819 B1**
(45) Veröffentlichungstag und Bekanntmachung des Hinweises auf die Patenterteilung: **28.09.2011**
(21) Anmeldenummer: 08850705.8
(22) Anmeldetag: 06.11.2008
(51) Int. Cl.: F16C 29/04, F16C 33/38

(54) **LINEARWÄLZLAGERKÄFIG**
LINEAR BEARING CAGE
CAGE DE ROULEMENT LINÉAIRE

(30) Priorität: 13.11.2007 DE 102007054407
(43) Veröffentlichungstag der Anmeldung: 18.08.2010
(73) Patentinhaber: AB SKF, 415 50 Göteborg (SE)
(72) Erfinder: EDELMANN, Ludwig, 97717 Sulzthal (DE); MAYER, Uwe, 97702 Münnerstadt (DE); STAHL, Erwin, 97714 Oerlenbach-Rottershausen (DE); VELDE, Henryk, 97440 Werneck (DE); WIESENAU, Doreen, 97525 Schwebheim (DE)
(74) Vertreter: Kohl, Thomas
(86) Internationale Anmeldenummer: PCT/EP2008/009368
(87) Internationale Veröffentlichungsnummer: WO 2009/062627

(56) Entgegenhaltungen:
- EP-A- 0 785 367
- JP-A- 7 301 233
- US-A- 2 311 815
- US-A- 3 582 161

## Beschreibung

Die Erfindung betrifft einen Linearwälzlagerkäfig.

Beispielsweise aus der US 2,311,815 ist ein Changierlager mit in einem Käfig angeordneten Kugeln bekannt, bei dem der im Wesentlichen hohlzylinderartige Käfig von einem hülsenartigen äußeren Laufbahnelement umschlossen ist, wobei an beiden axialen Enden des äußeren Laufbahnelements Ringe angeordnet sind, die als Endanschläge für den Käfig fungieren.

Davon ausgehend ist es eine Aufgabe der Erfindung, eine Verbesserung zu schaffen.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Linearwälzlagerkäfig folgende Merkmale:
- Der Käfig ist hohlzylinderartig ausgebildet und umfasst wenigstens zwei radiale Durchdringungen, in denen Wälzkörper anordenbar sind,
- an jedem der beiden axialen Enden ist der Käfig jeweils mit einem Anschlag für ein Begrenzen der Längsverschieblichkeit des Käfigs gegenüber einem den Käfig wenigstens teilweise umschließenden äußeren oder einem in der Höhlung des Käfigs anordenbaren inneren Laufbahnelement ausgebildet, und
- an wenigstens einem der beiden axialen Enden ist der Anschlag derart in radialer Richtung mit einer vorgebbaren Nachgiebigkeit ausgebildet, dass das Laufbahnelement axial auf oder in den Käfig auf- oder einschiebbar ist.

Gegenüber der eingangs beschriebenen Lösung der US 2,311,815 ergeben sich dabei insbesondere die Vorteile, dass sowohl der Käfig als auch das Laufbahnelement einstückig ausgebildet werden können und gleichzeitig der Käfig mit darin eingesetzten Wälzkörpern zusammen mit dem Laufbahnelement zu einer in sich verliersicheren Einheit zusammengesetzt werden kann. Gegenüber einer vergleichbaren Gleitlagerlösung werden weiterhin die Vorteile erzielt, dass sich eine stickslip-freie Lagerung ergibt, die über einen weiten Temperaturbereich von beispielsweise -40 °C bis +105 °C bei vergleichbaren Verschiebekräften funktionssicher ist. Weiterhin ist die Linearwälzlagerlösung gegenüber einer vergleichbaren Gleitlagerlösung hinsichtlich eines Klammems mit Vorteil unanfälliger.

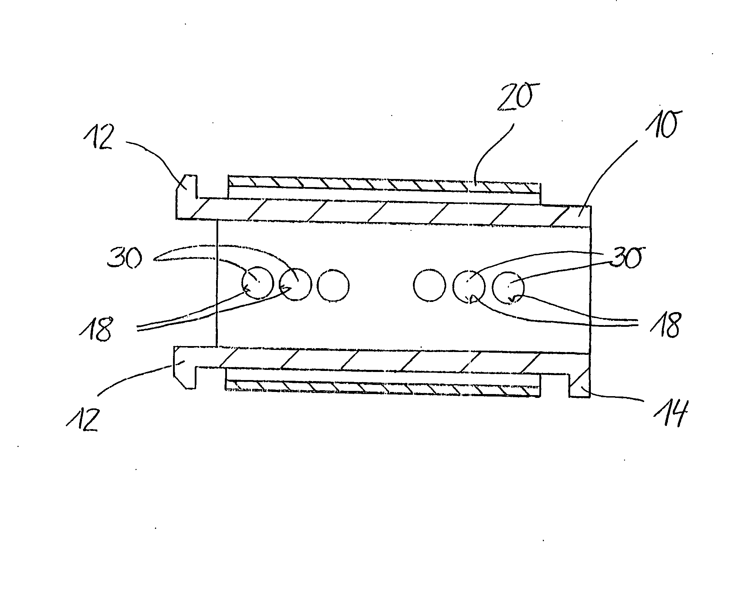

Weitere Vorteile, Merkmale und Einzelheiten der Erfindung ergeben sich aus dem im Folgenden beschriebenen Ausführungsbeispiel der Erfindung anhand der Figur.

Dabei zeigt die Figur als ein Ausführungsbeispiel der Erfindung einen Längsschnitt durch einen Linearwälzlagerkäfig 10 mit als Kugeln 30 ausgebildeten Wälzkörpern, der von einem hülsenartigen äußeren Laufbahnelement 20 umschlossen ist. Der Linearwälzlagerkäfig 10 umfasst dabei an seinem linken axialen Ende zwei sich von der Stirnseite des Käfigs 10 axial erstreckende, als Endanschlag für das äußere Laufbahnelement 20 fungierende hakenartige Schnappnasen 12. Am rechten axialen Ende des Linearwälzlagerkäfigs 10 ist ebenfalls ein Endanschlag für das äußere Laufbahnelement 20 realisiert, indem wenigstens in einem sektorartigen Bereich unmittelbar vom Außenmantel des Linearwälzlagerkäfigs 10 aus ein sich radial erstreckender Fortsatz 14 ausgebildet ist.

Die beiden Endanschläge dienen dabei einem Begrenzen der Längsverschieblichkeit des Käfigs 10 gegenüber dem äußeren Laufbahnelement 20, so dass sich beispielsweise ein maximaler Hub von wenigen bis einigen Millimetern einstellen lässt. Dadurch, dass am linken axialen Ende des Linearwälzlagerkäfigs 10 der Endanschlag durch die beiden hakenartigen Schnappnasen 12 gebildet ist, ist es mit besonderem Vorteil möglich, das hülsenartige äußere Laufbahnelement 20 aufgrund einer radial nach innen hin gerichteten elastischen Nachgiebigkeit der Schnappnasen 12 von der axial linken Seite her auf den Linearwälzlagerkäfig 10 aufzuschieben.

Der Linearwälzlagerkäfig 10 ist dabei einstückig und materialeinheitlich aus einem Kunststoff ausgebildet. Das äußere Laufbahnelement 20 ist aus einem ungehärteten Stahl ausgebildet. Auch ein im Inneren des Linearwälzlagerkäfigs 10 anordenbares, entsprechend einer kreiszylinderförmigen Welle ausgebildetes inneres Laufbahnelement kann aus einem ungehärteten Stahl ausgebildet sein. Das äußere hülsenartige Laufbahnelement 20 kann dabei zum festen Verbinden mit einer Einbauumgebung vorgesehen sein. In anderen Ausführungsformen, insbesondere in Abhängigkeit von den auftretenden Belastungen, können insbesondere für die Laufbahnelemente auch gehärtete Materialien zum Einsatz kommen.

Weiterhin umfasst der Linearwälzlagerkäfig 10 drei in Umfangsrichtung gleichmäßig verteilt angeordnete axiale Reihen von jeweils sechs radialen Durchdringungen 18 zum Aufnehmen der als Kugeln 30 ausgebildeten Wälzkörper. Dabei kann der Linearwälzlagerkäfig 10, insbesondere seine Durchdringungen 18 derart ausgebildet sein, dass der Linearwälzlagerkäfig 10 zusammen mit den in den Durchdringungen 18 eingelegten Kugeln 30 und dem aufgeschobenen äußeren Laufbahnelement 20 eine in sich verliersicher zusammenhaltende Einheit bilden. In einer anderen Ausführungsform können die Durchdringungen des Linearwälzlagerkäfigs auch derart ausgebildet sein, dass die Kugeln darin einschnappbar sind. Ebenso können in anderen Ausführungsformen die Durchdringungen auch derart ausgebildet sein, dass in einer einzelnen Durchdringung mehrere Wälzkörper anordenbar sind.

## Patentansprüche

1. Linearwälzlagerkäfig (10), beinhaltend folgende Merkmale:
- Der Käfig (10) ist hohlzylinderartig ausgebildet und umfasst wenigstens zwei radiale Durchdringungen (18), in denen Wälzkörper (30) anordenbar sind, und
- an jedem der beiden axialen Enden ist der Käfig (10) jeweils mit einem Anschlag (12,14) für ein Begrenzen der Längsverschieblichkeit des Käfigs (10) gegenüber einem den Käfig wenigstens teilweise umschließenden äußeren oder einem in der Höhlung des Käfigs anordenbaren inneren Laufbahnelement (20) ausgebildet, **dadurch gekennzeichnet, dass**
an wenigstens einem der beiden axialen Enden der Anschlag (12) derart in radialer Richtung mit einer vorgebbaren Nachgiebigkeit ausgebildete ist, dass das Laufbahnelement (20) axial auf oder in den Käfig (10) auf- oder einschiebbar ist.

2. Linearwälzlagerkäfig nach Anspruch 1, wobei der in radialer Richtung nachgiebig ausgebildete Anschlag wenigstens eine sich von einer der Stirnseiten des Käfigs (10) axial erstreckende hakenartige Schnappnase (12) umfasst.

3. Linearwälzlagerkäfig nach Anspruch 2, wobei zwei einander gegenüberliegende Schnappnasen (12) an der Stirnseite ausgebildet sind.

4. Linearwälzlagerkäfig nach Anspruch 2, wobei in Umfangsrichtung, insbesondere gleichmäßig verteilt, eine Mehrzahl größer als zwei derartiger Schnappnasen (12) ausgebildet ist.

5. Linearwälzlagerkäfig nach einem der Ansprüche 1 bis 4, wobei am anderen axialen Ende der Anschlag (14) derart gestaltet ist, dass von diesem axialen Ende ein Auf- oder Einschieben des Laufbahnelements (20) auf oder in den Käfig (10) verhindert ist.

6. Linearwälzlagerkäfig nach einem der Ansprüche 1 bis 5, wobei der Anschlag am anderen axialen Ende als ein sich unmittelbar vom Außenmantel des Hohlzylinders radial erstreckender Fortsatz (14) ausgebildet ist.

7. Linearwälzlagerkäfig nach einem der Ansprüche 1 bis 6, wobei der Käfig (10) einstückig und materialeinheitlich aus einem Kunststoff ausgebildet ist.

8. Linearwälzlagerkäfig nach einem der Ansprüche 1 bis 7, wobei der Käfig (10) hohlkreiszylinderartig ausgebildet ist.

9. Linearwälzlagerkäfig nach einem der Ansprüche 1 bis 8, wobei die Endanschläge für ein äußeres Laufbahnelement (20) ausgebildet sind und das äußere Laufbahnelement (20) hülsenartig, insbesondere aus einem ungehärteten Stahl ausgebildet ist.

10. Linearwälzlagerkäfig nach einem der Ansprüche 1 bis 9, wobei das innere Laufbahnelement entsprechend einer kreiszylinderartigen Welle insbesondere aus einem ungehärteten Stahl ausgebildet ist.

11. Linearwälzlagerkäfig nach einem der Anspruche 1 bis 10, wobei der Käfig (10) für mehrere axiale Reihen von Wälzkörpern (30) ausgebildet ist.

12. Linearwälzlagerkäfig nach einem der Ansprüche 1 bis 11, wobei jedem einzelnen Wälzkörper (30) eine eigene Durchdringung (18) zugeordnet ist.

13. Linearwälzlagerkäfig nach einem der Ansprüche 1 bis 12, wobei die Durchdringungen (30) für ein darin Einschnappen der Wälzkörper (30) ausgebildet sind.

14. Linearwälzlagerkäfig nach einem der Ansprüche 1 bis 13, wobei die Durchdringungen (18) derart ausgebildet sind, dass der Käfig (10) zusammen mit den Wälzkörpern (30) und dem äußeren oder inneren Laufbahnelement (20) eine in sich verliersicher zusammengehaltene Einheit bilden.

15. Linearwälzlagerkäfig nach einem der Ansprüche 1 bis 14, wobei die Wälzkörper Kugeln (30) umfassen.

## Claims

1. Linear anti-friction bearing cage (10) containing the following features:
- the cage (10) is configured in the manner of a hollow cylinder and comprises at least two radial penetrations (18), in which rolling bodies (30) can be arranged, and,
- at each of the two axial ends, the cage (10) is configured in each case with a stop (12, 14) for limiting the longitudinal displaceability of the cage (10) with respect to an outer raceway element (20) which encloses the cage at least partially or an inner raceway element (20) which can be arranged in the cavity of the cage, **characterized in that**,
at at least one of the two axial ends, the stop (12) is configured with a predefinable compliance in the radial direction in such a way that the raceway element (20) can be pushed axially onto or into the cage (10).

2. Linear anti-friction bearing cage according to Claim 1, the stop which is of compliant configuration in the radial direction comprising at least one hook-like snap-action lug (12) which extends axially from one of the end sides of the cage (10).

3. Linear anti-friction bearing cage according to Claim 2, two snap-action lugs (12) which lie opposite one another being formed on the end side.

4. Linear anti-friction bearing cage according to Claim 2, a plurality of, more than two, snap-action lugs (12) of this type being formed in a manner which is distributed in the circumferential direction, in particular uniformly.

5. Linear anti-friction bearing cage according to one of Claims 1 to 4, the stop (14) at the other axial end being designed in such a way that this axial end prevents the raceway element (20) being pushed onto or into the cage (10).

6. Linear anti-friction bearing cage according to one of Claims 1 to 5, the stop at the other axial end being configured as a projection (14) which extends radially directly from the outer circumference of the hollow cylinder.

7. Linear anti-friction bearing cage according to one of Claims 1 to 6, the cage (10) being configured in one piece, and using the same material, from one plastic.

8. Linear anti-friction bearing cage according to one of Claims 1 to 7, the cage (10) being configured in the manner of a hollow circular cylinder.

9. Linear anti-friction bearing cage according to one of Claims 1 to 8, the end stops being configured for an outer raceway element (20), and the outer raceway element (20) being of sleeve-like configuration, in particular made from an unhardened steel.

10. Linear anti-friction bearing cage according to one of Claims 1 to 9, the inner raceway element being configured, in particular made from an unhardened steel, in accordance with a circularly cylindrical shaft.

11. Linear anti-friction bearing cage according to one of Claims 1 to 10, the cage (10) being configured for a plurality of axial rows of rolling bodies (30).

12. Linear anti-friction bearing cage according to one of Claims 1 to 11, each individual rolling body (30) being assigned a dedicated penetration (18).

13. Linear anti-friction bearing cage according to one of Claims 1 to 12, the penetrations (18) being configured for the rolling bodies (30) to be snapped into them.

14. Linear anti-friction bearing cage according to one of Claims 1 to 13, the penetrations (18) being configured in such a way that, together with the rolling bodies (30) and the outer or inner raceway element (20), the cage (10) forms a unit which is held together captively.

15. Linear anti-friction bearing cage according to one of Claims 1 to 14, the rolling bodies comprising balls (30).

## Revendications

1. Cage de palier à roulement linéaire (10) comportant les attributs suivants :
- la cage (10) est formée comme un cylindre creux et comprend au moins deux percées radiales (18) dans lesquelles des corps de roulement (30) peuvent être agencés, et
- sur chacune des deux extrémités axiales, la cage (10) est formée respectivement avec une butée (12, 14) pour délimiter la mobilité longitudinale de la cage (10) par rapport à un élément de voie de roulement (20) extérieur entourant la cage au moins partiellement ou un élément de voie de roulement (20) intérieur pouvant être agencé dans la cavité de la cage, **caractérisée en ce que** sur au moins une des deux extrémités axiales, la butée (12) est formée avec une élasticité prédéfinissable dans le sens radial de telle sorte que l'élément de voie de roulement (20) peut être poussé axialement sur ou dans la cage (10).

2. Cage de palier à roulement linéaire selon la revendication 1, dans laquelle la butée formée de manière élastique dans le sens radial comprend au moins un ergot d'encliquetage (12) en forme de crochet s'étendant axialement à partir d'une des faces avant de la cage (10).

3. Cage de palier à roulement linéaire selon la revendication 2, dans laquelle deux ergots d'encliquetage (12) opposés l'un à l'autre sont formés sur la face avant.

4. Cage de palier à roulement linéaire selon la revendication 2, dans laquelle une pluralité de plus de deux ergots d'encliquetage (12) de ce genre est formée dans le sens périphérique, en particulier de manière répartie régulièrement.

5. Cage de palier à roulement linéaire selon l'une des revendications 1 à 4, dans laquelle la butée (14) est formée sur l'autre extrémité axiale de telle sorte qu'une poussée de l'élément de voie de roulement (20) sur ou dans la cage (10) par cette extrémité axiale est empêchée.

6. Cage de palier à roulement linéaire selon l'une des revendications 1 à 5, dans laquelle la butée sur l'autre extrémité axiale est formée comme un prolongement (14) s'étendant radialement directement à partir de l'enveloppe extérieure du cylindre creux.

7. Cage de palier à roulement linéaire selon l'une des revendications 1 à 6, dans laquelle la cage (10) est formée d'un seul tenant et d'un matériau homogène en plastique.

8. Cage de palier à roulement linéaire selon l'une des revendications 1 à 7, dans laquelle la cage (10) est formée comme un cylindre circulaire creux.

9. Cage de palier à roulement linéaire selon l'une des revendications 1 à 8, dans laquelle les butées d'extrémité sont formées pour un élément de voie de roulement (20) extérieur et l'élément de voie de roulement (20) extérieur est formé comme un manchon, en particulier dans un acier non trempé.

10. Cage de palier à roulement linéaire selon l'une des revendications 1 à 9, dans laquelle l'élément de voie de roulement intérieur est formé de manière correspondante à un arbre de type cylindre creux, en particulier dans un acier non trempé.

11. Cage de palier à roulement linéaire selon l'une des revendications 1 à 10, dans laquelle la cage (10) est formée pour plusieurs rangées axiales de corps de roulement (30).

12. Cage de palier à roulement linéaire selon l'une des revendications 1 à 11, dans laquelle chaque corps de roulement (30) individuel possède sa propre percée (18).

13. Cage de palier à roulement linéaire selon l'une des revendications 1 à 12, dans laquelle les percées (18) sont formées pour une insertion par encliquetage des corps de roulement (30) dans celles-ci.

14. Cage de palier à roulement linéaire selon l'une des revendications 1 à 13, dans laquelle les percées (18) sont formées de telle sorte que la cage (10) forme, conjointement avec les corps de roulement (30) et l'élément de voie de roulement (20) extérieur ou intérieur, une unité dont les éléments constitutifs sont maintenus ensemble de manière imperdable.

15. Cage de palier à roulement linéaire selon l'une des revendications 1 à 14, dans laquelle les corps de roulement comprennent des billes (30).
